Europäisches Patentamt

European Patent Office

Office européen des brevets

(11) Veröffentlichungsnummer: **0 417 516 A2**

## (12) EUROPÄISCHE PATENTANMELDUNG

(21) Anmeldenummer: 90116071.3

(22) Anmeldetag: 22.08.90

(51) Int. Cl.⁵: **B29C 67/22**, B29C 33/14, B29C 33/18, //B29L31:58

(30) Priorität: 13.09.89 DE 3930526

(43) Veröffentlichungstag der Anmeldung:
20.03.91 Patentblatt 91/12

(84) Benannte Vertragsstaaten:
ES FR GB IT SE

(71) Anmelder: GRAMMER AG
Wernher-von-Braun-Strasse 6
W-8450 Amberg/Opf.(DE)

(72) Erfinder: Kurz, Helmut
Dr.-Christoph-Gack-Strasse 20
W-8458 Sulzbach-Rosenberg(DE)
Erfinder: Kühlthau, Fritz
Hölderlinstrasse 6
W-8450 Amberg/Opf(DE)

(74) Vertreter: LOUIS, PÖHLAU, LOHRENTZ &
SEGETH
Kesslerplatz 1 Postfach 3055
W-8500 Nürnberg-1(DE)

(54) Verfahren zur Herstellung eines hinterschäumten Polsterteils und Vorrichtung zur Durchführung des Verfahrens.

(57) Es wird ein Verfahren und eine Vorrichtung zur Herstellung eines hinterschäumten Polsterteils beschrieben, wobei in eine Form (16) ein Bezug (12) eingebracht, die Form (16) mit einem Deckel (18) verschlossen und auf die von der Form (16) abgewandte Rückseite des Bezugs (12) ein Reaktionsgemisch aufgebracht wird. Das Reaktionsgemisch schäumt bei Ablauf der Reaktion auf und füllt den zwischen der Form (16) und dem Deckel (18) festgelegten, dem hinterschäumten Polsterteil entsprechenden Hohlraum (14) aus. Um einen unerwünschten Verschnitt des Bezugsmaterials zu vermeiden, wird der Bezug (12) mit seinem umlaufenden Randabschnitt (24) passend ausgeformt und am umlaufenden Randabschnitt (26) der Innenfläche (20) der Form (16) mit mindestens einem Halteelement (28) festgehalten, bevor die Form (16) mit dem Deckel (18) verschlossen wird.

# VERFAHREN ZUR HERSTELLUNG EINES HINTERSCHÄUMTEN POLSTERTEILS UND VORRICHTUNG ZUR DURCHFÜHRUNG DES VERFAHRENS

Die Erfindung betrifft ein Verfahren zur Herstellung eines hinterschäumten Polsterteils, wobei in eine an das Polsterteil angepasste Form ein Bezug eingebracht, die Form in der Nachbarschaft des umlaufenden Randabschnittes der Innenkontur der Form mit einem Deckel verschlossen und auf die von der Form abgewandte Rückseite des Bezugs ein Reaktionsgemisch aufgebracht wird, das bei Ablauf der Reaktions aufschäumt und den zwischen der Form und dem Deckel festgelegten, dem Polsterteil entsprechenden Hohlraum ausfüllt, sowie eine Vorrichtung zur Durchführung dieses Verfahrens.

Bei der Herstellung eines solchen hinterschäumten Polsterteils kommt bislang ein Bezug zur Anwendung, der einen Befestigungs-Randabschnitt aufweist, mit dem der Bezug mittels einer Spann- bzw. Halteeinrichtung am Formwerkzeug festgelegt wird, bevor das Formwerkzeug mit dem Deckel zur Ausbildung des Formhohlraums verschlossen wird. Nach der Herstellung des hinterschäumten Polsterteils wird der überstehende Befestigungs-Randabschnitt des Bezugs vom Polsterteil abgetrennt. Ein derartiges bekanntes Verfahren ist bspw. in der DE 36 26 984 C1 offenbart. Der Befestigungs-Randabschnitt des Bezugs bildet demnach einen Verschnitt, durch den die Materialkosten des hinterschäumten Polsterteils erhöht sind. Ein weiterer Mangel besteht darin, dass der über das Polsterteil überstehende Befestigungs-Randabschnitt des Bezugs vom fertigen hinterschäumten Polsterteil abgetrennt werden muss, was einen zusätzlichen Arbeitsaufwand darstellt, der sich auf die Herstellungskosten des hinterschäumten Polsterteils auswirkt.

Der Erfindung liegt die Aufgabe zugrunde, ein Verfahren der eingangs genannten Art und eine Vorrichtung zur Durchführung dieses Verfahrens zu schaffen, wobei ein Verschnitt bei dem Bezug für das hinterschäumte Polsterteil vermieden wird.

Diese Aufgabe wird verfahrensgemäss dadurch gelöst, dass der Bezug mit seinem umlaufenden Randabschnitt am umlaufenden Randabschnitt der Innenfläche der Form mit mindestens einem Halteelement festgehalten wird bevor die Form mit dem Deckel verschlossen wird. Der Bezug für das hinterschäumte Polsterteil wird erfindungsgemäss also nicht an der Aussenseite des Formwerkzeugs, sondern am umlaufenden Randabschnitt der Innenfläche der Form, d.h. des Formwerkzeugs, festgehalten. Der Bezug wird also bereits vor dem Einbringen in die Form mit der genau richtigen Aussenkontur hergestellt. Das kann bspw. in einem Stanzvorgang ausgeführt werden. Es wird bei Durchführung dieses Verfahrens also nicht nur ein Verschnitt des Bezugsmaterials vermieden, sondern auch ein relativ aufwendiger Schneidvorgang zum Abschneiden des vom hinterschäumten Polsterteil wegstehenden Randabschnittes des Bezugs.

Zur Festlegung des umlaufenden Randabschnittes des Bezugs am umlaufenden Randabschnitt der Innenfläche der Form kann dabei derartig vorgegangen werden, dass der Bezug mit seinem umlaufenden Randabschnitt zuerst am Halteelement festgelegt wird, und dass anschliessend der Bezug mit dem Halteelement in die Form eingebracht wird, wonach das Reaktionsgemisch eingebracht und die Form mit dem Deckel verschlossen wird. Eine andere Möglichkeit besteht darin, dass der Bezug mit seinem umlaufenden Randabschnitt in einem zwischen dem Halteelement und dem umlaufenden Randabschnitt der Innenfläche der Form vorhandenen Festhaltespalt angeordnet und festgehalten wird, wonach das Reaktionsgemisch eingebracht und die Form mit dem Deckel verschlossen wird. Im zuerst beschriebenen Verfahren kann der Bezug demnach ausserhalb der Form am Halteelement festgelegt werden, was den Vorteil besitzt, dass die Taktzeiten zum Anordnen und Festhalten des Bezugs am Halteelement von den Taktzeiten zur Ausschäumung des Formhohlraums der Form unabhängig sind. Wenn es auf diese Unterschiede in den genannten Taktzeiten nicht ankommt, kann entsprechend der zweiten, oben beschriebenen Verfahrensweise vorgegangen werden, bei welcher der Bezug mit seinem umlaufenden Randabschnitt in dem zwischen dem Halteelement und dem umlaufenden Randabschnitt der Innenfläche der Form vorhandenen Festhaltespalt angeordnet und festgehalten wird. In Abhängigkeit von der Ausbildung der Form, d.h. der Querschnittsgestalt des hinterschäumten Polsterteils kann das Reaktionsgemisch in die Form bei geöffnetem Deckel oder erst nach der Anordnung des Deckels auf der Form in den Hohlraum eingebracht werden.

Der Bezug kann mittels des aufschäumenden Reaktionsgemisches an die Innenfläche der Form eng angelegt werden. Eine andere Möglichkeit ist in an sich bekannter Weise dadurch gegeben, dass der Bezug mittels eines an die Form anzulegenden Unterdrucks an die Innenfläche der Form eng anliegend angesaugt wird, bevor die Form mit dem Deckel verschlossen und das Reaktionsgemisch auf die Rückseite des Bezugs aufgebracht wird. Selbstverständlich ist auch eine Kombination der beiden zuletzt beschriebenen Verfahrensvarianten möglich, d.h. ein Ansaugen des Bezugs an die Form und eine Unterstützung der engen Anlage des Bezugs an die Innenfläche der Form infolge des aufschäumenden Reaktionsgemisches, durch das im abgeschlossenen Formhohlraum ein erhöhter Druck gebildet wird, mittels welchem der Bezug eng an die Innenfläche der Form angelegt wird.

Nach dem Ablauf der Reaktion des Reaktionsgemisches kann der Deckel von der Form entfernt und das Polsterteil aus der Form entnommen werden, wonach das Halteelement vom hinterschäumten Polsterteil entfernt werden kann, so dass zwischen dem zum Rücken des Polsterteils benachbarten umlaufenden Randabschnitt des Bezugs und dem durch den Deckel bestimmten Rücken des Polsterteils im Polsterteil eine dem Halteelement entsprechende Rinne ausgebildet wird. Diese Rinne kann bei geeigneter Ausbildung des Halteelementes sehr kleine Querschnittsabmessungen besitzen, so dass sie sich am fertigen hinterschäumten Polsterteil kaum oder nicht bemerkbar macht.

Vorrichtungsgemäss wird die der Erfindung zugrundeliegende Aufgabe dadurch gelöst, dass das Halteelement zum Festhalten des umlaufenden Randabschnittes des Bezugs an dem zum Deckel im verschlossenen Zustand benachbarten umlaufenden Randabschnitt der Innenfläche der Form vorgesehen und durch einen Festhaltespalt vom Randabschnitt der Innenfläche der Form beabstandet ist. Das Halteelement ist also nicht -wie eingangs erwähnt worden ist- an der Aussenseite der Form zum Festhalten eines Festhalte-Randabschnittes des Bezugs, der nach der Ausformung des hinterschäumten Polsterteiles vom Polsterteil abgetrennt werden muss, vorgesehen, sondern an dem zum Deckel im verschlossenen Zustand der Form benachbarten umlaufenden Randabschnitt der Innenfläche der Form.

Das Halteelement zum Festhalten des Bezugs kann einen umlaufenden Kragen aufweisen, durch den der Festhaltespalt zwischen dem Halteelement und der Innenfläche der Form bestimmt ist. Eine solche Ausbildung des Halteelementes ist insbes. dann möglich, wenn die durch den Deckel zu verschliessende Form eine nicht abgestufte, wenigstens annähernd in einer Ebene liegende Öffnung aufweist.

Der Festhaltespalt weist vorzugsweise eine Spaltbreite auf, die höchstens der Wanddicke des Bezugs an seinem Randabschnitt entspricht. Die Spaltbreite des Festhaltespaltes ist vorzugsweise etwas kleiner als die Wanddicke des Bezugs, bei dem es sich um ein mit einer Kaschierschicht ausgebildetes textiles Bezugsmaterial handeln kann, so dass der umlaufende Randabschnitt des Bezugs im Festhaltespalt sicher eingezwängt und festgehalten wird.

Insbes. bei einer Ausbildung des Halteelementes mit einem umlaufenden Kragen kann das Halteelement einen Anlageansatz aufweisen, der vom Kragen radial nach aussen wegsteht und der zur Anlage an einem als Auflage für den Deckel dienenden Anlageabschnitt der Form vorgesehen sein kann. Durch den Anlageansatz wird ein derartig ausgebildetes Halteelement daran gehindert, zu weit in den Formhohlraum hineinbewegt zu werden.

Eine andere bevorzugte Ausführungsform der erfindungsgemässen Vorrichtung ist dadurch gekennzeichnet, dass das Halteelement mindestens ein Rippenelement aufweist, das von der Innenfläche der Form durch den Festhaltespalt beabstandet ist. Eine solche Vorrichtung ist dann vorteilhaft, wenn die durch den Deckel abzuschliessende Öffnung des Formhohlraums abgestuft ausgebildet ist, wobei in den unterschiedlichen Höhenzonen je ein Rippenelement vorgesehen sein kann. Bei einer solchen Vorrichtung kann das/jedes Rippenelement an einem Rahmen der Form vorgesehen sein.

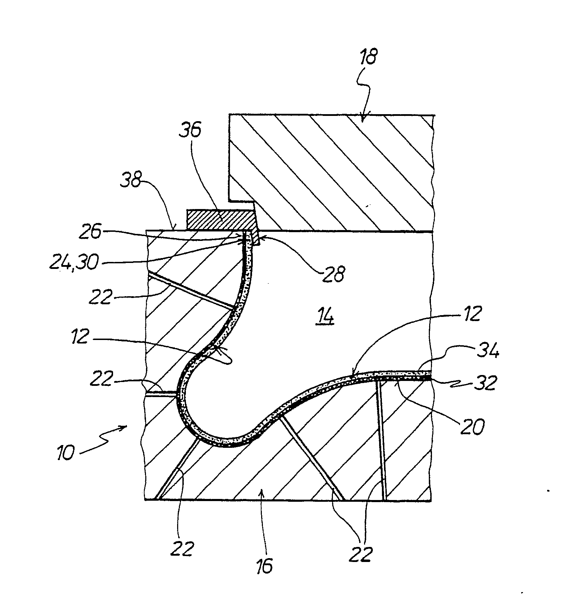

Weitere Einzelheiten, Merkmale und Vorteile ergeben sich aus der nachfolgenden Beschreibung eines in der Zeichnung dargestellten Ausführungsbeispieles der erfindungsgemässen Vorrichtung zur Durchführung des erfindungsgemässen Verfahrens zur Herstellung eines hinterschäumten Polsterteils. Die Figur zeigt in einer Schnittdarstellung einen Ausschnitt der Vorrichtung 10 zur Herstellung eines mit einem Bezug 12 versehenen hinterschäumten Polsterteils, dessen räumliche Form dem Formhohlraum 14 der Vorrichtung 10 entspricht. Die Vorrichtung 10 weist eine Form 16 und einen Deckel 18 auf. Der Deckel 18 ist von der Form 16 entfernbar bzw. auf der Form 16 unter Ausbildung des Formhohlraumes 14 anordenbar. Die Form 16 ist mit einer dem herzustellenden hinterschäumten Polsterteil entsprechenden Innenkontur 20 ausgebildet. Die Form 16 kann mit Duchgangskanälen 22 ausgebildet sein, die einseitig in den Formhohlraum 14 einmünden und die ausserhalb der Form 16 mit einer (nicht gezeichneten) Vakuumerzeugungseinrichtung verbunden sein können. Mit Hilfe der Durchgangskanäle 22 ist es möglich, den Bezug 12 eng und faltenfrei an die Innenkontur 20 der Form 16 anzusaugen und den Bezug 12 an der Innenkontur 20 der Form 16 festzuhalten. Selbstverständlich wäre es auch möglich, auf die Durchgangskanäle 22 zu verzichten und den Bezug 12 durch den Druck des aufschäumenden Reaktionsgemisches allein an der Form 16 festzulegen. In die Form 16 wird ein Bezug 12 eingelegt, der mit seinem umlaufenden Randabschnitt 24 an den umlaufenden Randabschnitt 26 der Innenkontur 20 der Form 16 genau angepasst ist. Der umlaufende Randabschnitt 24 des Bezugs 12 wird am umlaufenden Randabschnitt 26 der Innenkontur 20 der Form 16 mittels eines Halteelementes 28 festgehalten. Zu diesem Zweck weist das Halteelement 28 vom umlaufenden Randabschnitt 26 der Innenkontur 20 der Form 16 einen solchen Abstand auf, dass sich zwischen dem Halteelement 28 und dem umlaufenden Randabschnitt 26 der Innenkontur 20 ein Festhaltespalt 30 ergibt, in dem der umlaufende Randabschnitt 24 des Bezugs 12 festgeklemmt und festgehalten wird. Bei dem Bezug 12 handelt es sich vorzugsweise um ein textiles oder anderes Bezugsmaterial 32, das an seiner Rück- bzw. Innenseite mit einer Kaschierschicht 34 beschichtet sein kann. Dadurch ergibt sich ein in seinen Dikkenabmessungen veränderbarer, d.h. stauchbarer Bezug 12, der problemlos im Festhaltespalt 30 fixiert werden kann.

Das Halteelement 28 kann mit einem Anlageabsatz bzw. mit einem Rahmen 36 versehen sein.

Zur Herstellung eines hinteschäumten Polsterteils kann wie folgt vorgegangen werden:

Bei geöffneter Vorrichtung 10, d.h. bei von der Form 16 entferntem Deckel 18 wird in die Form 16 der Bezug 12 eingebracht und eng an die Innenkontur 20 der Form 16 angelegt. Gleichzeitig oder daran anschliessend wird der umlaufende Randabschnitt 24 des Bezugs 12 in dem zwischen dem Halteelement 28 und dem umlaufenden Randabschnitt 26 der Innenkontur 20 der Form 16 ausgebildeten Festhaltespalt 30 12 festgeklemmt. Dann wird die Form 16 unter Ausbildung des Formhohlraumes 14 mit dem Deckel 18 verschlossen und in den Formhohlraum 14 ein Reaktionsgemisch eingebracht. Das Einbringen des Reaktionsgemisches in den Formhohlraum 14 kann vor dem Anbringen des Deckels 18 oder nach dem Verschliessen der Vorrichtung 10 mit dem Deckel 18 erfolgen, wobei es im zuletzt genannten Fall selbstverständlich erforderlich ist, den Deckel 18 mit mindestens einer Eingiessöffnung auszubilden, durch die hindurch in den Formhohlraum 14 das Reaktionsgemisch eingebracht wird. Während des Ablaufes der Reaktion des Reaktionsgemisches, bei dem es sich bspw. um ein Polyurethan-Reaktionsgemisch handeln kann, schäumt das Reaktionsgemisch auf und füllt den Formhohlraum 14 vollständig aus. Gleichzeitig verbindet sich das Reaktionsgemisch mit dem Bezug 12, d.h. mit dessen Kaschierschicht 34. Nach dem Ablauf der Reaktion des Reaktionsgemisches kann der Deckel 18 von der Form 16 entfernt werden. Anschliessend kann das hinterschäumte Polsterteil aus der Form 16 entnommen werden. Vorher, gleichzeitig oder nachher kann das Halteelement 28 mit seinem Anlageabsatz bzw. Rahmen 36 vom hinterschäumten Polsterteil entfernt werden.

Bei einer anderen Verfahrensweise wird der Bezug 12 an einer von der Vorrichtung 10 entfernten Stelle am Halteelement 28 festgelegt, was möglich ist, wenn der Bezug 12 einen umlaufenden Randabschnitt 24 besitzt, der etwas kürzer ist als das entsprechend umlaufende Halteelement 28, das bspw. in sich geschlossen kragenförmig oder mit Rippen ausgebildet sein kann. Nach dem Festlegen des Bezugs 12, d.h. des umlaufenden Randabschnittes 24 des Bezugs 12 am Halteelement 28 wird der Bezug 12 mit dem Halteelement 28 in den Formhohlraum 14 der Form 16 eingebracht, wobei diese Einbringung durch den Anlageabsatz bzw. Rahmen 36 begrenzt wird. Der Anlageabsatz 36 bzw. Rahmen liegt dann nämlich auf der Oberseite 38 der Form 16 an. Der Bezug 12 wird dann eng an die Innenkontur 20 der Form 16 in an sich bekannter Weise angelegt, wonach der Formhohlraum 14 mit dem Deckel 18 verschlossen werden kann. Vorher, gleichzeitig oder nachher kann -wie bereits weiter oben beschrieben worden ist- in den Formhohlraum 14 ein Reaktionsgemisch eingebracht werden. Die restlichen

Verfahrensschritte zur Herstellung eines hinterschäumten Polsterteils entsprechen den oben beschriebenen Verfahrensschritten, so dass es sich erübrigt, diese noch einmal zu beschreiben.

**Ansprüche**

1. Verfahren zur Herstellung eines hinterschäumten Polsterteils, wobei in eine an das Polsterteil angepasste Form (16) ein Bezug (12) eingebracht, die Form (16) in der Nachbarschaft des umlaufenden Randabschnittes (26) der Innenkontur (20) der Form (16) mit einem Deckel (18) verschlossen und auf die von der Form (16) abgewandte Rückseite des Bezugs (12) ein Reaktionsgemisch aufgebracht wird, das bei Ablauf der Reaktion aufschäumt und den zwischen der Form (16) und dem Deckel (18) festgelegten, dem Polsterteil entsprechenden Hohlraum (14) ausfüllt,
**dadurch gekennzeichnet,**
dass der Bezug (12) ohne Übermass vorgefertigt und mit seinem umlaufenden Randabschnitt (24) am umlaufenden Randabschnitt (26) der Innenfläche (20) der Form (16) mit mindestens einem Halteelement (28) festgehalten wird, bevor die Form (16) mit dem Deckel (18) verschlossen wird.
2. Verfahren nach Anspruch 1,
**dadurch gekennzeichnet,**
dass derBezug (12) mit seinem umlaufenden Randabschnitt (24) zuerst am Halteelement (28) festgelegt wird, und dass anschliessend der Bezug (12) mit dem Halteelement (28) in die Form (16) eingebracht wird, wonach das Reaktionsgemisch eingebracht und die Form (16) mit dem Deckel (18) verschlossen wird.
3. Verfahren nach Anspruch 1,
**dadurch gekennzeichnet,**
dass der Bezug (12) mit seinem umlaufenden Randabschnitt (24) in einem zwischen dem Halteelement (28) und dem umlaufenden Randabschnitt (26) der Innenfläche (20) der Form (16) vorhandenen Festhaltespalt (30) angeordnet und festgehalten wird, wonach das Reaktionsgemish eingebracht und die Form (16) mit dem Deckel (18) verschlossen wird.

4. Verfahren nach einem der Ansprüche 1 bis 3,
**dadurch gekennzeichnet,**
dass der Bezug (12) mittels des aufschäumenden Reaktionsgemishes an die Innenfläche (20) der Form (16) eng angelegt wird.

5. Verfahren nach einem der Ansprüche 1 bis 3,
**dadurch gekennzeichnet,**
dass der Bezug (12) mittels eines an die Form (16) anzulegenden Unterdrucks an die Innenfläche (20) der Form (16) enganliegend angesaugt wird, bevor die Form (16) mit dem Deckel (18) verschlossen und das Reaktionsgemish auf die Rückseite des Bezugs (12) aufgebracht wird.

6. Verfahren nach einem der Ansprüche 2 bis 4,
**dadurch gekennzeichnet,**
dass nach dem Ablauf der Reaktion des Reaktionsgemishes der Deckel (18) von der Form (16) entfernt und das Polsterteil aus der Form (16) entnommen wird, wonach das Halteelement (28) vom hinterschäumten Polsterteil entfernt wird, so dass zwischen dem zum Rücken des Polsterteils benachbarten umlaufenden Randabschnitt (24) des Bezugs (12) und dem durch den Deckel (18) bestimmten Rücken des Polsterteils im Polsterteil eine dem Halteelement (28) entsprechende Rinne ausgebildet wird.

7. Vorrichtung zur Durchführung des Verfahrens nach einem der vorhergehenden Ansprüche zur Herstellung eines mit einem Bezug versehen hinterschäumten Polsterteils, mit einer Form (16), deren Innenfläche (20) der Oberfläche des Polsterteils entspricht, mit einem Halteelement (28) zum Festhalten des Bezugs (12) an der Form (16) und mit einem Deckel (18) zum Verschliessen der Form (16) und zur Ausbildung eines dem Polsterteil volumenmässig entsprechenden Hohlraums (14) zwischen der Form (16) und dem Deckel (18) im verschlossenen Zustand der Form (16),
**dadurch gekennzeichnet,**
dass das Halteelement (28) zum Festhalten des umlaufenden Randabschnittes (24) des Bezugs (12) an dem zum Deckel (18) im verschlossenen Zustand benachbarten umlaufenden Randabschnitt (26) der Innenfläche (20) der Form (16) vorgesehen und durch einen Festhaltespalt (30) vom Randabschnitt (26) der Innenfläche (20) der Form (16) beabstandet ist.

8. Vorrichtung nach Anspruch 7,
**dadurch gekennzeichnet,**
dass das Halteelement (28) zum Festhalten des Bezugs (12) einen umlaufenden Kragen aufweist, durch den der Festhaltespalt (30) zwischen dem Halteelement (28) und der Innenfläche (20) der Form (16) bestimmt ist.

9. Vorrichtung nach Anspruch 7 oder 8,
**dadurch gekennzeichnet,**
dass der Festhaltespalt (30) eine Spaltbreite aufweist, die höchstens der Wanddicke des Bezugs (12) an seinem Randabschnitt (24) entspricht.

10. Vorrichtung nach einem der Anspreüche 7 bis 9,
**dadurch gekennzeichnet,**
dass das Halteelement (28) einen Anlageansatz (36) aufweist, der vom Kragen radial nach aussen wegsteht, und der zur Anlage an einem als Auflager für den Deckel (18) dienenden Anlageabschnitt (38) der Form (16) vorgesehen ist.

11. Vorrichtung nach Anspruch 7,
**dadurch gekennzeichnet,**
dass das Halteelement (28) mindestens ein Rippenelement aufweist, das von der Innenfläche (20) der Form (16) durch den Festhaltespalt (30) beabstandet ist.

12. Vorrichtung nach Anspruch 11,
**dadurch gekennzeichnet,**
dass das/jedes Rippenelement an einem Rahmen (36) der Vorrichtung (10) vorgesehen ist.